# EUROPÄISCHE PATENTSCHRIFT

(11) **EP 2 043 834 B1**
(45) Veröffentlichungstag und Bekanntmachung des Hinweises auf die Patenterteilung: **24.09.2014**
(21) Anmeldenummer: 07763733.8
(22) Anmeldetag: 04.07.2007
(51) Int. Cl.: B29C 45/17, B29C 33/10, B29C 45/26

(54) **SPRITZGIESSVERFAHREN**
INJECTION MOULDING PROCESS
PROCÉDÉ DE MOULAGE PAR INJECTION

(30) Priorität: 17.07.2006 AT 12202006
(43) Veröffentlichungstag der Anmeldung: 08.04.2009
(73) Patentinhaber: Haidlmair Holding GmbH, 4542 Nussbach (AT)
(72) Erfinder: ECKHART, Christian, A-4564 Klaus (AT)
(74) Vertreter: Secklehner, Günter
(86) Internationale Anmeldenummer: PCT/AT2007/000333
(87) Internationale Veröffentlichungsnummer: WO 2008/009033

(56) Entgegenhaltungen:
- JP-A- 2003 127 191
- US-A- 5 612 067
- US-A1- 2005 046 091

## Beschreibung

Die Erfindung betrifft ein Verfahren zur Herstellung eines Polymer-Formteils mit einem Hohlraum mit den Merkmalen des Anspruchs 1.

Zur Herstellung von Hohlraum-Formteilen aus Kunststoff ist schon seit Längerem die so genannte Gasinjektionstechnik (GIT) etabliert, bei der flüssige Schmelze aus dem Inneren eines Spritzgussteiles durch Injektion eines Druckgases verdrängt wird und dadurch ein Hohlraum im Inneren des Spritzgussteils hergestellt wird. Im Zuge der Weiterentwicklung dieses Verfahrens wurde als Druckmedium zur Schaffung des Hohlraums anstatt Gas eine Flüssigkeit, vornehmlich Wasser, eingesetzt, woraus sich die so genannte Wasserinjektionstechnik (WIT) entwickelt hat. Die Verwendung von Wasser als Druckfluid bringt dabei insofern Vorteile, da geringere und gleichmäßigere Restwanddicken als beim Gasinjektionsverfahren erzielbar sind und die erforderlichen Kühlzeiten durch die hohe Wärmeaufnahmekapazität des Wassers deutlich gesenkt werden. Weiters weisen mit der WIT hergestellte Hohlräume sehr glatte Innenwände auf, wodurch sich dieses Verfahren auch für die Herstellung von Medienleitungen gut eignet.

Analog zur Gasinjektionstechnologie haben sich auch bei der Wasserinjektionstechnik verschiedene Verfahrensvarianten entwickelt. Beim so genannten Teilfüllungsverfahren wird in einem ersten Schritt die Kavität nur teilweise mit Schmelze gefüllt und in einem zweiten Schritt durch das Einspritzen von Flüssigkeit durch den Injektor in die Schmelze das Verdrängen der Schmelze an die Wände der Kavität bewirkt. Anschließend wird die Flüssigkeit aus dem Formteil entfernt und der Formteil nach Öffnen des Werkzeugs entformt.

Beim so genannten Überlaufverfahren bzw. Nebenkavitätenverfahren wird zunächst eine Hauptkavität mit Kunststoffschmelze vollständig gefüllt und die zu verdrängende Kunststoffschmelze durch Injektion von Flüssigkeit in eine nachträglich geöffnete Nebenkavität verdrängt. Das Überlaufverfahren bietet gegenüber dem Teilfüllungsverfahren eine bessere Reproduzierbarkeit sowie Oberflächenqualität der Formteile, da die äußere Kontur zur Gänze im wesentlichen durch den eigentlichen Spritzgießvorgang gebildet wird.

Die Erfindung bezieht sich auf eine Verbesserung des Überlaufverfahrens, weshalb sich die folgenden Ausführungen ausschließlich auf dieses beziehen. Das Überlaufverfahren wird der Kategorie der Ausblasverfahren zugeordnet, da die überschüssige Kunststoffschmelze durch Injektion des Druckfluids aus dem Formteil regelrecht ausgeblasen wird.

Ein Verfahren zur Herstellung eines Kunststoff-Bauteils mit einem Innenhohlraum, gemäß dem Oberbegriff des Anspruchs 1, ist aus DE 103 39 859 B3 bekannt. Dabei wird in eine Spritzgießform und deren Kavität zunächst Kunststoffschmelze eingespritzt und anschließend zur Verdrängung von Kunststoffschmelze aus dem zu bildenden Innenhohlraum zuerst Gas und unmittelbar danach Kühlflüssigkeit in diesen Innenhohlraum eingeleitet. Eine Variante dieses Verfahrens besteht gemäß der DE-B3 weiters darin, dass die verdrängte Kunststoffschmelze in eine Nebenkavität verdrängt wird, die während des Einspritzens der Kunststoffschmelze geschlossen ist und erst bei Beginn der Verdrängung der Schmelze durch das Gas- bzw. die Flüssigkeit geöffnet wird. In der Ausführung gemäß Fig. 13 der DE-Schrift ist in der Nebenkavität eine Auslassöffnung für das Gas vorgesehen, die über ein drosselbares Ventil mit der Atmosphäre oder einem Auffangraum verbunden sein kann, sodass an dieser Stelle Gas gedrosselt abgelassen werden kann, um seinen Druck konstant zu halten. Zusätzlich kann über diese Auslassöffnung und das Drosselventil auch Kühlflüssigkeit abgelassen werden.

Gegenüber Verfahren, bei denen für die Flüssigkeitszufuhr und die Flüssigkeitsabfuhr jeweils eine eigene Injektionsvorrichtung vorgesehen ist, kann bei der beschriebenen Verfahrensvariante auf eine Injektionseinrichtung zur Flüssigkeitsabfuhr verzichtet werden, wodurch der bauliche Aufwand reduziert wird.

Ein Nachteil dieses Verfahrens besteht darin, dass bei nicht entsprechender Dimensionierung der Nebenkavität ein vermehrtes Austreten von Kunststoffschmelze durch die Auslassöffnung zwangsläufig zu einer Verstopfung am drosselbaren Ventil oder im Auffangraum führt oder Flüssigkeit im Inneren der Nebenkavität durch die Schmelze austreten kann, wodurch der nachfolgende Spritzgießvorgang z.B. durch Dampfblasenbildung empfindlich gestört werden kann.

Weiters offenbart JP 2003-127191 A ein Verfahren zum Spritzgießen von Kunststoffteilen, die einen aufgeschäumten Innenkern besitzen, mittels eines Gasinjektionsverfahrens. Dazu wird in einem ersten Schritt eine Spritzgießform vollständig mit einem aufschäumbaren Kunststoff unter hohem Druck befüllt und in einem zweiten Schritt durch Injektion von Hochdruckgas ein Teil des schmelzflüssigen Kernmaterials in eine während des ersten Schritts geschlossene Nebenkavität verdrängt. In einem dritten Schritt wird das unter ho-hem Druck im Inneren des Spritzgießteils enthaltene Gas wieder abgelassen, wodurch das noch schmelzflüssige Kunststoffmaterial aufgrund des gesunkenen Drucks aufschäumen kann und dadurch den inneren Schaumkern bildet. In einem vierten Schritt wird dieser geschäumte Kern noch einmal mit Gas unter hohem Druck befüllt, das in einem fünften Schritt wieder aus dem Schaumstoffkörper abgelassen wird. Das Gas dient bei diesem Verfahren zum Herstellen eines Hohlraums im Inneren des Spritzgießteiles durch Verdrängen des schmelzflüssigen Innenkerns in eine Nebenkavität sowie zum Kühlen des in diesem Innenraum entstandenen Kunststoffschaumes durch adiabate Expansion, wodurch die Zykluszeiten zur Herstellung eines derartigen Kunststoffteils verringert werden können.

Ein weiteres Verfahren zur Herstellung eines Kunststoff-Spritzgießteiles mit einem Hohlraum mittels eines Gasinjektionsverfahrens wird in US 5,612,067 A offenbart. In einem ersten Schritt wird dabei eine Hauptkavität einer Spritzgießform mit Kunststoffschmelze befüllt und in einem zweiten Schritt durch Einblasen von Gas unter hohem Druck der noch nicht an der Formwand erstarrte, noch schmelzflüssige Kunststoffkern in eine Nebenkavität verdrängt. In einem weiteren Schritt wird durch einen Gaseinblasmechanismus, in den sich bis in die Nebenkavität erstreckenden Hohlraum im Inneren des Kunststoffhohlkörpers ein Hochdruckgas eingeleitet, um im Inneren des Kunststoffhohlteiles einen hohen Druck aufrecht zu erhalten und dadurch Einfallstellen zu vermeiden.

Ausgehend von diesem Stand der Technik stellt sich die Aufgabe, ein Verfahren bereit zu stellen, das die zuverlässige und störungsfreie Anwendung des Injektionsverfahrens, insbesondere unter Vermeidung der vorgenannten Nachteile zulässt. Gelöst wird diese Aufgabe durch ein Verfahren mit den Merkmalen des unabhängigen Anspruchs 1, das beispielsweise mit einem in Folge beschriebenen Spritzgießwerkzeug ausgeführt werden kann. Erfindungswesentlich ist dabei, dass an die Austrittsöffnung eine erweiterte Austrittskavität anschließt, die der kontrollierten Aufnahme von austretender Schmelze dient und der Punkt, an dem die Flüssigkeit die Wand des Polymer-Bauteils durchbricht, in einem definierten Bereich und in einem Abstand zur Hauptkavität und zur Nebenkavität liegt.

Gegenüber bei aus dem Stand der Technik bekannten Verfahren, bei dem die Druckflüssigkeit durch Einstechen eines zweiten Injektors in den von der Druckflüssigkeit gebildeten Hohlraum am von ersten Injektor entfernten, anderen Ende des Hohlraums erfolgt, kann beim erfindungsgemäßen Verfahren ein zweiter Injektor entfallen, wodurch eine potentielle Fehlerquelle wegfällt und die Werkzeugkosten reduziert sind.

Eine besonders vorteilhafte Ausführungsvariante des Verfahrens besteht darin, wenn ein durch die Zuführung zugeführter Volumenstrom der Flüssigkeit vom Beginn der Schmelzeverdrängung bis zum Austreten von Flüssigkeit durch den Ablaufanschluss der Austrittskavität einen Wert größer 0 aufweist, die Flüssigkeit während des gesamten Verdrängungsvorganges und somit auch gegen Ende der Schmelzeverdrängung nicht zum Stillstand kommt, wie dies beim Verfahren mit einem zweiten Injektor erforderlich ist, da hierbei mit dem Einstechen des zweiten Injektors abgewartet werden muss, bis die Bauteilwand vollständig erstarrt ist. Dadurch, dass die Flüssigkeit in dem von ihr gebildeten Hohlraum nicht zum Stillstand kommt, ist ein wesentlich besserer Wärmeübergang vom Formteil in die Flüssigkeit gegeben und die erforderliche Abkühlzeit zum Erstarren des Formteilmaterials ist wesentlich geringer. Weiters ist der steuerungstechnische Aufwand wesentlich geringer, da die Zufuhr von Flüssigkeit nicht zu einem genau definierten Zeitpunkt unterbrochen werden muss und der von einer Flüssigkeitspumpe, vorzugsweise Verdrängerpumpe, z.B. einer Kolbenpumpe erzeugte Volumenstrom über eine Bypass-Leitung abgeführt werden muss, sondern einfach aufrecht erhalten werden kann, bis die Flüssigkeit den Ablaufanschluss an der Austrittskavität erreicht hat.

Um die Bildung des Hohlraumes und damit zusammenhängend auch die verbleibenden Wandstärken am Polymer-Formteil zu beeinflussen, ist es von Vorteil, wenn ein durch die Zuführung zugeführter Volumenstrom der Flüssigkeit mittels einer Steuer- und Regeleinrichtung an einen vorgegebenen Verlauf anpassbar ist. So kann z.B. durch eine Anhebung des Volumenstroms, etwa durch Drehzahlerhöhung eines Antriebsmotors der Versorgungspumpe das Verdrängen der Schmelze beschleunigt werden, wodurch weniger Zeit für das Erstarren der Schmelze zur Verfügung steht und mehr Schmelze verdrängt wird, wodurch geringe Restwandstärken des Polymerformteils verbleiben. Der vorgegebene Verlauf des Volumenstroms kann dabei in einem von der Steuer- und Regeleinrichtung lesbaren Speichermedium hinterlegt sein, oder anwendungsspezifisch neu erstellt werden.

Umgekehrt kann durch Verringerung des Volumenstroms die Verdrängung der Schmelze verlangsamt werden, wodurch eine Verschiebung in Richtung größerer Restwandstärken erfolgt. Analog kann eine Steuerung der Schmelzeverdrängung über eine Druckregelung der Flüssigkeit erfolgen, wodurch ebenfalls die Bildung des Hohlraums beeinflusst werden kann.

Für die Durchführung des Verfahrens kann es auch von Vorteil sein, wenn durch aktive Beeinflussung der Wärmeabfuhr bzw. Wärmezufuhr im Bereich von Austrittsöffnung und Austrittskanal verhindert wird, dass die Schmelze bei der Austrittsöffnung und/oder im Austrittskanal erstarrt, bevor die Flüssigkeit die Austrittskavität erreicht. Dadurch kann sichergestellt werden, dass auch bei eventuellen Schwankungen im Betriebszustand der Spritzgießanlage die Durchführbarkeit des Verfahrens gegeben ist, da das Austreten von Flüssigkeit nicht durch einen vollständig erstarrten Querschnitt in der Austrittsöffnung oder im Austrittskanal blockiert wird.

Da die Menge der von der Flüssigkeit aus dem Polymer-Formteil verdrängten Schmelze aufgrund verschiedenster Einflüsse schwanken kann, ist es von Vorteil, wenn die Verfahrensparameter so gewählt sind, dass nach Austritt der Flüssigkeit am Ablaufanschluss etwa 50 % des Volumens der Austrittskavität von Schmelze eingenommen sind. Sollte bei einem Herstellzyklus weniger Schmelze verdrängt werden, liegt der Punkt, an dem die Flüssigkeit die Schmelzefront durchbricht, trotzdem bereits im Bereich der Austrittskavität und nicht etwa im Bereich der Austrittsöffnung oder in der Nebenkavität. Ebenso liegt dieser Punkt noch im Bereich der Austrittskavität, falls eine größere Menge von Schmelze verdrängt wird. Als Verfahrensparameter für die Beeinflussung dieses Volumens, kann beispielsweise das Volumen der Nebenkavität, das Volumen der Austrittskavität, das Volumen des Hohlraumes - beeinflusst durch den Zeitpunkt der Flüssigkeitsinjektion oder die Geschwindigkeit des Verdrängungsvorgangs - verwendet werden.
Vorteilhaft für das Verfahren ist weiters, wenn das Volumen der Nebenkavität so gewählt ist, dass der von der Flüssigkeit in der Nebenkavität gebildete Hohlraum nur unwesentlich über die Position der Austrittsöffnung hinausragt. Dadurch ist vermieden, dass sich nach der Austrittsöffnung in der Nebenkavität ein toter Arm des Hohlraums ausbildet, aus dem die Flüssigkeit nicht zuverlässig entfernt werden kann, z.B. durch Ausblasen des Hohlraums von der Zuführung her mit Druckluft.

Die Verwendung von Wasser als Flüssigkeit zur Bildung des Hohlraums ist von Vorteil, da dieses über die höchste Wärmeaufnahmekapazität verfügt, wodurch ein guter Wärmeübergang vom Polymer-Formteil in die Flüssigkeit gegeben ist, weiters ist Wasser im Vergleich zu anderen Flüssigkeiten, wie z.B. Öl, unproblematisch in der Handhabung und kostengünstig verfügbar. Durch gewisse Zusatzstoffe im Wasser können darüber hinaus die Eigenschaften für die Verfahrensanwendung noch verbessert werden.

Um ein Entformen des gespritzten und anschließend ausgehöhlten Formteils in einem Stück zu ermöglichen, ist es günstig, wenn die Austrittskavität und/oder der Austrittskanal von einer Ausnehmung in den Teilungsflächen zumindest zweier zusammenwirkender Formelemente gebildet ist und dadurch beim Öffnen der Spritzgießform einfach entformbar ist. Bei einer Orientierung wie aus dem Stand der Technik bekannt, bei der der Austrittskanal von einem Formelement allein gebildet ist, kann eine daran anschließende Austrittskavität mit vergrößertem Querschnitt nicht auf einfache Weise entformt werden.

Eine vorteilhafte Ausführung des Spritzgießwerkzeugs besteht darin, dass die Austrittskavität eine Entformschräge aufweist. Durch um wenige Grade geneigte Wandflächen der Austrittskavität kann das erstarrte Material problemlos entformt werden, zudem an diesen vom eigentlichen Polymerbauteil zu trennenden Abschnitt meistens keine Anforderungen bezüglich der Geometrie bestehen.

Gut abschätzbare Fließverhältnisse der Schmelze bzw. der Flüssigkeit werden erzielt, wenn die Nebenkavität und/oder die Austrittsöffnung einen kreisförmigen Querschnitt aufweisen. Die Auswirkung von Änderungen an den Verfahrensparametern kann in diesem Fall gut abgeschätzt werden, da einfache Strömungsverhältnisse vorliegen.

Zur optimalen Einstellung des Verfahrens ist es günstig, an der Nebenkavität eine verstellbare Begrenzungsfläche vorzusehen, wodurch das Volumen der Nebenkavität veränderbar ist. Dies kann z.B. dadurch erreicht werden, indem die Stirnfläche einer zylindrischen Nebenkavität durch die Stirnfläche eines mittels einer Schraube verstellbaren Zylinders, der mit kleiner Spielpassung in der Nebenkavität axial geführt ist, gebildet ist. Neben dieser axialen Verlängerung der Nebenkavität ist jedoch auch durch verstellbare oder austauschbare Einsätze in den Formelementen eine Veränderung des Strömungsquerschnitts der Nebenkavität möglich.

Eine weitere Möglichkeit, das Verfahren zur Erzielung eines guten Ergebnisses anzupassen besteht darin, die Austrittsöffnung durch im Spritzgießwerkzeug befestigte Wechselelemente zu bilden. Die Größe als auch die Form der Austrittsöffnung kann damit einfach durch Austausch der Wechselelemente verändert werden.

Eine Möglichkeit die Sicherheit des Verfahrens, insbesondere das unbeabsichtigte Eintreten von Schmelze in den Flüssigkeitskreislauf zu vermeiden besteht darin, wenn die Austrittskavität im Abschnitt vor den Ablaufanschluss eine mechanische Rückhalteeinrichtung für erstarrte oder weitgehend erstarrte Schmelze aufweist. Durch den Einbau von entsprechenden Hindernissen, die die Strömung von Flüssigkeit zulassen, jedoch den Durchtritt von Schmelze bzw. erstarrten Materials verhindern, können nachfolgende Einrichtungen zur Abscheidung von Kunststoff aus dem Flüssigkeitskreislauf entfallen bzw. einfacher gehalten werden.

Um ein leichtes Entformen von erstarrtem Material aus der Austrittskavität sicher zu stellen, ist es von Vorteil, wenn die Rückhalteeinrichtung durch zueinander parallele, in Entformrichtung orientierte Stabelemente gebildet ist, die insbesondere in zumindest einer, quer zur Durchströmrichtung der Austrittskavität ausgerichteten Reihe angeordnet sind. Diese bilden somit ein Gitter, welches das Material zurückhält. Bei mehreren Reihen können die einzelnen Stäbe in Durchströmrichtung betrachtet gegeneinander versetzt angeordnet sein, wodurch die Separationswirkung noch verbessert wird. Eine hohe Sicherheit gegen Störungen durch Verstopfungen im nachfolgenden Flüssigkeitskreislauf erzielt man, wenn die lichte Weite zwischen nebeneinander liegenden Stabelementen kleiner als 30 % der geringsten Durchgangsweite des Ablaufanschlusses ist.

Für die kontrollierte Füllung der Nebenkavität und der Austrittskavität mit der verdrängten Schmelze ist es von Vorteil, wenn das Verhältnis aus der Querschnittsfläche der Austrittsöffnung, bezogen auf die Querschnittsfläche der Nebenkavität im Bereich der Austrittsöffnung, einen Wert kleiner als 0,5, vorzugsweise kleiner als 0,3, insbesondere kleiner als 0,1 aufweist. Dadurch wird erzielt, dass der Großteil der verdrängten Schmelze zuerst an der Austrittsöffnung vorbeiströmt und der dahinter liegende Teil der Nebenkavität ausgefüllt wird. Dadurch wird vermieden, dass frühzeitig Schmelze durch die Austrittsöffnung in die Austrittskavität gelangt und erstarrt, bevor die Flüssigkeit die Schmelze in der Austrittskavität durchdringen kann.

Weiters ist es günstig, wenn das Verhältnis aus der Querschnittsfläche der Austrittsöffnung, bezogen auf die Querschnittsfläche der Austrittskavität, einen Wert kleiner als 0,1 aufweist. Dadurch wird die Geschwindigkeit der Schmelzefront in der Austrittskavität deutlich reduziert, wodurch die Gefahr, dass Schmelze bis zum Ablaufanschluss dringt, deutlich verringert.

Eine weitere Maßnahme, den Anteil der durch die Austrittsöffnung austretenden Schmelze kontrolliert niedrig zu halten besteht darin, dass die Durchströmrichtung durch die Austrittsöffnung quer zur Durchströmrichtung durch die Nebenkavität ausgerichtet ist. Die Fließrichtung kann dabei jeweils als mit der Achsrichtung zusammenfallend angenommen werden, d.h. die Fließrichtung durch die Austrittsöffnung wird im Wesentlichen durch die Achsrichtung eines die Austrittsöffnung mit der Austrittskavität verbindenden Austrittskanals bestimmt und die Fließrichtung in der Nebenkavität im Wesentlichen durch die Achsrichtung der Nebenkavität. Dadurch, dass die Fließrichtung durch die Austrittsöffnung quer zur Fließrichtung in der Nebenkavität ausgerichtet ist, ist zum Eintritt von Schmelze in die Austrittsöffnung eine Änderung der Strömungsrichtung erforderlich, weshalb die Schmelze in erster Linie zuerst die Nebenkavität ausfüllt und erst im Anschluss daran in nennenswerter Menge durch die Austrittsöffnung fließt.

Eine weitere Möglichkeit, den Volumenstrom der Schmelze in die Austrittsöffnung zu regulieren, besteht darin, den Winkel zwischen der Fließrichtung bzw. der Achsrichtung in der Nebenkavität und der Fließrichtung bzw. der Achsrichtung durch die Austrittsöffnung in einem Bereich zwischen 60° und 120° zu variieren, wobei ein Winkel von 90° gute Ergebnisse bringt und baulich einfach herzustellen ist.

Um Turbulenzen beim Abzweigen der Schmelze von der Nebenkavität in die Austrittsöffnung zu vermeiden, kann der Übergang von der Nebenkavität zur Austrittsöffnung bzw. in den Austrittskanal abgerundet ausführt sein.

Um sicherzustellen, dass das Durchbrechen und Austreten der Flüssigkeit durch die Schmelze in der Austrittskavität erfolgt, ist es von Vorteil, wenn das Volumen der Nebenkavität kleiner ist, als das Volumen der bei der Erzeugung des Hohlraums in der Hauptkavität verdrängten Schmelze. Dadurch ist sichergestellt, dass Schmelze auch bis in die Austrittskavität gedrückt wird und der Flüssigkeitsaustritt in dieser erfolgt.

Für die Betriebssicherheit und die Produktqualität ist es von großer Bedeutung, dass während des gesamten Verfahrensablaufs keine Flüssigkeit in das Spritzgießwerkzeug, insbesondere die Hauptkavität und die Nebenkavität eindringt, da dies die Formfüllung des einleitenden Spritzgießvorganges behindern und damit auch die Produktqualität beeinträchtigen würde sowie das Spritzgießwerkzeug beschädigen könnte. Dies wird zum Einen durch die vorgenannten Maßnahmen und Merkmale bewerkstelligt, wodurch die Position, an der die Flüssigkeit durch die Schmelze nach außen dringt, zuverlässig in die Austrittskavität verlegt ist und somit nicht im Bereich der Hauptkavität oder der Nebenkavität liegt, zum Anderen sind auch folgende Maßnahmen möglich, die auch beim und nach dem Öffnen der Spritzgießform verhindern, dass Flüssigkeit in das Spritzgießwerkzeug eindringt.

Eine erste diesbezügliche Maßnahme besteht darin, dass an einer an die Austrittskavität angrenzenden Teilungsfläche zumindest eines Formelements mit einer Absaugeinrichtung verbindbare Vakuumöffnungen angeordnet sind. Dadurch wird Flüssigkeit, die sich nach dem Entleeren des Hohlraums über den Ablaufanschluss noch in der Austrittskavität befindet, abgesaugt, sobald sie in den Bereich der Vakuumöffnungen gelangt. Die Vakuumöffnungen sind dabei vorzugsweise schlitzartig ausgebildet, wobei die Schlitze im Wesentlichen parallel zur Umfangskontur der Austrittskavität angeordnet sind. Flüssigkeitstropfen, die die Austrittskavität in radialer Richtung verlassen, gelangen somit zwangsläufig in den Bereich einer Vakuumöffnung und werden abgesaugt. Ein zuverlässiges Absaugen von austretender Flüssigkeit wird weiters durch eine Ausführung begünstigt, bei der die Vakuumöffnungen am Grund von rillenartigen Vertiefungen in der Teilungsfläche angeordnet sind. Insbesondere bei größeren Mengen an Flüssigkeit, die die Austrittskavität in radialer Richtung verlassen, wird diese durch die rillenartigen Vertiefungen aufgefangen und den Vakuumöffnungen zugeführt.
Als Absaugeinrichtung kann dabei jede Art von Vakuumerzeuger eingesetzt werden, wie z.B. Vakuumgebläse, Vakuumpumpen, Ejektoren usw., die über Leitungen und/oder Kanäle mit den Vakuumöffnungen fluidverbunden sind. Vorteilhaft umfasst die Absaugeinrichtung einen Abscheider für vom Luftstrom aufgenommene Flüssigkeit.

Eine weitere vorteilhafte Maßnahme besteht darin, in der Teilungsfläche im Bereich des Austrittskanals zwischen Austrittsöffnung und Austrittskavität quer zur Mittelachse des Austrittskanals beidseitig orientierte Ausnehmungen zum Anspritzen von Abdichtstegen anzuordnen. Diese Abdichtstege werden während des Verdrängprozesses durch Eintreten von Schmelze in die quer orientierten Ausnehmungen ausgefüllt und bilden wenn die Flüssigkeitsfront die Schmelzefront in der Austrittskavität durchbricht und diese vollständig flutet eine Barriere, die verhindert, dass Flüssigkeit in der Teilungsebene zwischen den Formelementen von der Austrittskavität in Richtung der Nebenkavität bzw. Hauptkavität gelangen. Auch nach dem Öffnen der Spritzgießform bilden die Abdichtstege Barrieren für Flüssigkeitstropfen, die in Richtung der Nebenkavität laufen könnten. Beim Formelement, das nach dem Öffnen nicht den gespritzten Bauteil enthält, bildet die Ausnehmung eine Rille, die ebenfalls den Transport von Flüssigkeit in Richtung der Nebenkavität hemmt.

Eine weitere Maßnahme zur Verhinderung des Austretens von Flüssigkeit aus dem Bereich der Austrittskavität besteht darin, an der Teilungsfläche zumindest eines Formelements um die Austrittskavität ein zwischen den Formelementen wirkendes, elastisches Dichtelement anzuordnen. Dieses Dichtelement und eine entsprechende Aufnahme sind dabei so abgestimmt, dass die Teilungsflächen der Formelemente vollständig zueinander in Kontakt gebracht werden können, dabei aber durch Verformung des Dichtelements ein Dichtungsdruck wird. D.h. dass das Dichtelement im geöffneten Zustand des Spritzgießwerkzeugs gegenüber der Teilungsfläche erhaben ist. Die Dichtwirkung kann insbesondere in Kombination mit der Absaugung durch die Vakuumöffnungen kombiniert werden, wenn das Dichtelement den mit Vakuumöffnungen versehenen Bereich der Teilungsflächen weitgehend umschließt, wobei die Vakuumöffnungen seinerseits die Austrittskavität möglichst vollständig umschließen. Die Enden des Dichtelements werden dazu möglichst nahe an den Austrittskanal herangeführt. Beim Öffnen des Spritzgießwerkzeuges und aktivierter Absaugung über die Vakuumöffnungen, tritt die Luft zuerst zwischen den Enden der Dichtelemente und dem mit Schmelze gefüllten Austrittskanal in den Bereich der Austrittskavität ein, wodurch die Strömungsrichtung dieses Lufteintrittes ein Bewegen von Flüssigkeit in Richtung der Nebenkavität hemmt.

Als Dichtelement wird vorzugsweise eine O-Ringschnur-Dichtung, insbesondere aus einem Perflourelastomer oder Nitrilbutylgummi verwendet, die in einer entsprechenden Aufnahmerille in einem Formelement des Spritzgießwerkzeugs eingesetzt ist.

Für ein zuverlässiges Entformen der bis in die Austrittskavität verdrängten und erstarrten Schmelze ist es von Vorteil, in Strömungsrichtung betrachtet, am Beginn der Austrittskavität einen Auswerfer für den Polymer-Formteil anzuordnen. Durch diese Positionierung am Beginn der Austrittskavität wird der Auswerfer auch in dem Fall wirksam, wenn nur wenig Schmelze bis in die Austrittskavität verdrängt wurde.

Die Erfindung wird im Nachfolgenden anhand der in den Zeichnungen dargestellten Ausführungsbeispiele näher erläutert.

Es zeigen jeweils in vereinfachter, schematischer Darstellung:
- Fig. 1: einen Schnitt durch ein aus dem Stand der Technik bekanntes Spritzgießwerkzeug zur Herstellung eines Formteiles mit einem Hohlraum;
- Fig. 2: einen Schnitt durch das aus dem Stand der Technik bekannte Spritzgießwerkzeug gemäß Fig. 1 entlang der Linie II - II;
- Fig. 3: einen Schnitt durch ein nicht erfindungsgemäßes Spritzgießwerkzeug zur Ausführung des erfindungsgemäßen Verfahrens mit derselben Schnittführung wie in Fig. 2 zu einem Zeitpunkt, bei dem die Flüssigkeit die Austrittsöffnung an der Nebenkavität noch nicht erreicht hat;
- Fig. 4: einen Schnitt durch ein Spritzgießwerkzeug gemäß Fig. 3 mit derselben Schnittführung wie in Fig. 2 zu einem Zeitpunkt, in dem die Flüssigkeit den Ablaufanschluss in der Austrittskavität erreicht hat;
- Fig. 5: ein weiteres Ausführungsbeispiel eines nicht erfindungsgemäßen Spritzgießwerkzeuges zur Ausführung des erfindungsgemäßen Verfahrens in Draufsicht bei abgehobener oberer Formhälfte;
- Fig. 6: einen Schnitt durch die Austrittskavität des Spritzgießwerkzeuges gemäß Fig. 5, entlang der Linien VI-VI in Fig. 5.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

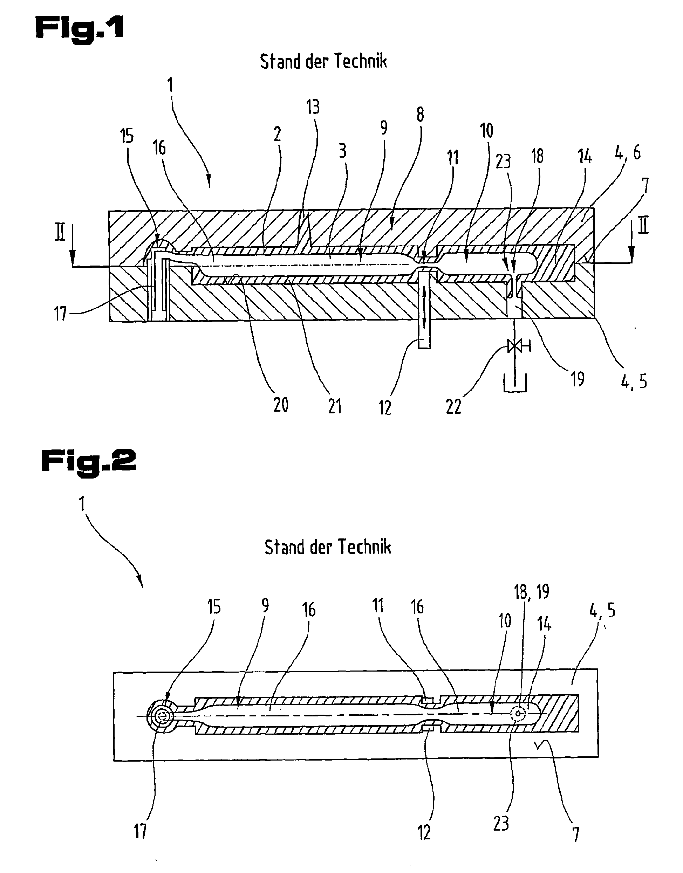

Fig. 1 zeigt einen Schnitt durch ein aus dem Stand der Technik bekanntes Spritzgießwerkzeug 1 zur Herstellung eines Formteils 2 mit einem Hohlraum 3 im Inneren des Formteils 2. Das Spritzgießwerkzeug 1 besteht aus mehreren Formelementen 4, in diesem Beispiel aus einer unteren Formhälfte 5 und einer oberen Formhälfte 6, die einander im geschlossenen Zustand des Spritzgießwerkzeugs 1 entlang einer gemeinsamen Teilungsfläche 7 kontaktieren. Das Spritzgießwerkzeug 1 weist durch entsprechende Aufnehmungen in den Formelementen 4 zumindest eine Kavität 8 auf, die eine Hauptkavität 9 und eine Nebenkavität 10 umfasst. Eine Verbindungsöffnung 11, zwischen Hauptkavität 9 und Nebenkavität 10, ist dabei mittels eines Absperrelements 12 verschließbar ausgebildet, wobei in Fig. 1 die geöffnete Stellung des Absperrelements 12 dargestellt ist.

Die Hauptkavität 9 weist einen Angusskanal 13 zum Einbringen von Schmelze 14 aus einem mit dem Spritzgießverfahren verarbeitbaren Kunststoff bzw. Polymer auf, weiters eine Zuführung 15 zum Einbringen von Flüssigkeit 16, die den Hohlraum 3 im Formteil 2 durch Verdrängen von Schmelze 14 bildet. Die Zuführung 15 besteht dabei im Wesentlichen aus einer Injektoreinrichtung 17, durch die die Flüssigkeit 16 mit Druck in die Hauptkavität 9 eingebracht werden kann. Diese Injektoreinrichtung 17 ist aus dem Stand der Technik bekannt und wird an dieser Stelle nicht näher erläutert.

Die Nebenkavität 10 weist eine Austrittsöffnung 18 auf, an die ein Austrittskanal 19 anschließt, der durch das Spritzgießwerkzeug 1 nach außen führt.

Das mit einem Spritzgießwerkzeug 1 ausführbare Verfahren zur Herstellung eines Formteils 2 mit einem Hohlraum 3 wird auch als Nebenkavitätenverfahren bezeichnet und gehört zur Klasse der Ausblasverfahren, bei dem Schmelze im Inneren eines Formteils durch Einbringen eines Druckfluids in das Innere aus dem Formteil verdrängt wird. Das Verfahren wir im Folgenden kurz dargestellt.

Im ersten Verfahrensschritt wird durch den Angusskanal 13 Schmelze 14 in das Spritzgießwerkzeug 1 eingebracht, bis die Hauptkavität 9 vollständig mit Schmelze 14 gefüllt ist. Das Absperrelement 12 ist während dieser Phase geschlossen, wodurch die Verbindungsöffnung 11 von der Hauptkavität 9 zur Nebenkavität 10 geschlossen ist und die Schmelze nur den Bereich der Hauptkavität 9 ausfüllt. Unmittelbar nach dem Einspritzen der Schmelze 14 beginnt an der Kavitätenwand 20 das Erstarren der Schmelze 14, wodurch der Formteil 2 gebildet wird. Der nächste Verfahrensschritt besteht im Verdrängen von Schmelze 14 aus dem Formteil 2, wodurch der Hohlraum 3 im Inneren des Formteils 2 gebildet wird. Eingeleitet wird dieser Verfahrensschritt mit dem Aktivieren der Injektoreinrichtung 17 und dem Öffnen des Absperrelements 12, wodurch die Verbindungsöffnung 11 von der Hauptkavität 9 zur Nebenkavität 10 freigegeben wird. Da die Schmelze 14 auch im Bereich der Injektoreinrichtung 17 erstarrt, umfasst diese beispielsweise eine Hohlnadel, mit der die erstarrte Wand des Formteils 2 im Bereich der Zuführung 15 durchstoßen wird und unter Druck stehende Flüssigkeit 16 in den Bereich der flüssigen Schmelze 14 eingepresst wird. Da die Schmelze 14 im Wesentlichen inkompressibel ist, wird die Schmelze 14 durch die nunmehr geöffnete Verbindungsöffnung 11 in die Nebenkavität 10 verdrängt. Die Größe des Hohlraums 3 und die damit zusammenhängende Dicke der Formteilwand 21 bestimmt sich im Wesentlichen aus der Zeitspanne vom Füllen der Hauptkavität 9 mit Schmelze 14 bis zur Verdrängen der Schmelze 14 durch die Flüssigkeit 16. Da der Erstarrungsvorgang vereinfacht betrachtet von außen nach innen verläuft, wird durch frühes Einleiten des Verdrängungsprozesses eine dünne Wandstärke erzielt, während bei längeren Zeitspannen kleinere Hohlräume 3 und somit dicke Formteilwände 21 erzielt werden. Die Nebenkavität 10 nimmt im Verlauf des Verfahrens vorerst nur die verdrängte Schmelze 14 auf, erst in einer späteren Phase, wenn die Flüssigkeit 16 die Verbindungsöffnung 11 zur Nebenkavität 10 passiert hat, die gesamte verdrängte Schmelze 14 und die in die Nebenkavität 10 eingeströmte Flüssigkeit 16. Sobald das gesamte Volumen der Nebenkavität 10 mit verdrängter Schmelze 14 und Flüssigkeit 16 ausgefüllt ist, verlässt die Flüssigkeit 16 die Nebenkavität 10 durch die Austrittöffnung 18 und den daran anschließenden Austrittskanal 19. Im angeführten Stand der Technik ist dabei vorgesehen, dass das durch die Austrittsöffnung 18 austretende Gas bzw. Kühlflüssigkeit über ein drosselbares Ventil 22 das Spritzgießwerkzeug 1 verlässt. Z.B. in die Atmosphäre oder einen Auffangraum. Die durch das Ventil 22 erzielte Drosselfunktion dient bei diesem Verfahren dazu, das Druckfluid, also das Gas und die Kühlflüssigkeit nicht schlagartig entweichen zu lassen, wodurch der Druck im Hohlraum 3 des Formteils 2 weitgehend konstant gehalten werden kann. Die Austrittsöffnung 28 bildet somit eine Abführung 23, durch die die Flüssigkeit 16 den von ihr gebildeten Hohlraum 3 im Formteil 2 verlassen kann. Es ist jedoch auch möglich, die Fließrichtung der Flüssigkeit 16 im Hohlraum 3 nach Erreichen der Abführung 23 durch die Flüssigkeit 16 umzukehren, um den Formteil 2 durch die bewegte Flüssigkeit 16 von Innen besser zu kühlen. Die Abführung 23 ist in diesem Fall zumeist durch eine zweite Injektoreinrichtung 17 gebildet, die anstelle der Austrittsöffnung 18 vorgesehen ist.

Für die Anwendung dieses Verfahrens ist es dabei von großer Bedeutung, das Volumen der Nebenkavität 10 im Spritzgießwerkzeug 1 richtig zu dimensionieren, da bei zu geringen Volumen der Nebenkavität 10 eine größere Menge von Schmelze 14 bis in den Austrittskanal 19 bzw. bis zum Ventil 22 gelangen kann, wodurch ein Entformten des erstarrten Formteils 20 aus der Nebenkavität 10 erschwert bzw. unmöglich wird. Andererseits kann es bei zu groß gewählten Volumen der Nebenkavität 10 dazu kommen, dass die Flüssigkeit 16 durch die verdrängte Schmelze 14 durchbricht und die Nebenkavität 10 mit Flüssigkeit 16 gefüllt wird. Da bei einem nachfolgenden Entleeren und/oder Ausblasen des Hohlraums 3 leicht eine Restmenge von Flüssigkeit 16 in der Nebenkavität 10 verbleiben kann, besteht die Gefahr, dass Restmengen von Flüssigkeit 16 in der Hauptkavität 9 bzw. der Nebenkavität 10 den Spritzgießvorgang des nächsten Produktionszyklus, z.B. durch Bildung von Dampfblasen, nachteilig beeinflusst.

Fig. 2 zeigt einen Schnitt durch das aus dem Stand der Technik bekannte Spritzgießwerkzeug 1, gemäß der Linie II-II in Fig. 1. Fig. 2 zeigt dabei einen Zeitpunkt im Verfahrensablauf, bei dem die Flüssigkeit 16 nach dem Verdrängen der Schmelze 14 aus der Hauptkavität 9 in die Nebenkavität 10 bereits die Austrittsöffnung 18 erreicht hat. An dieser Stelle sei noch erwähnt, dass vom gesamten erstarrten Polymer-Formteil 2 alle nicht für die Weiterverwendung vorgesehenen Bestandteile, wie der Angusskanal 13, die Nebenkavität 10, das in der Verbindungsöffnung 11 erstarrte Material, sowie der Bereich um die Zuführung 15 im Allgemeinen vom eigentlich weiterverwendbaren Werkstück nach dem Entformen in zusätzlichen Verfahrensschritten getrennt wird.

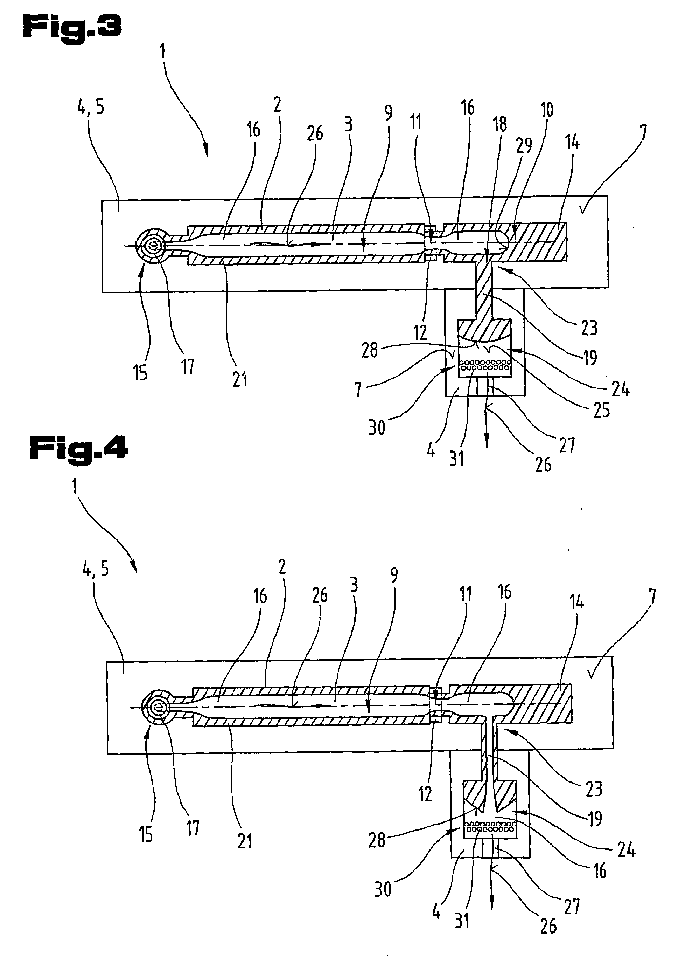

Fig. 3 zeigt in gleicher Schnittführung, wie in Fig. 2, ein Spritzgießwerkzeug 1 zur Herstellung eines Formteils 2 mit einem Hohlraum 3 mittels des erfindungsgemäßen Verfahrens. Hierbei ist als Formelement 4 wieder die untere Formhälfte 5 zusammen mit dem geschnittenen Formteil 2 während der Durchführung des Verfahrens dargestellt. Das Spritzgießwerkzeug 1 weist dabei wieder eine Hauptkavität 9 auf, in die durch einen nicht dargestellten Angusskanal 13 Schmelze 14 eines Kunststoff- bzw. Polymer-Werkstoffs mit den aus dem Stand der Technik bekannten Spritzgießverfahren eingebracht wird. Die Hauptkavität 9 weist dabei wieder eine Zuführung 15 in Form einer Injektorvorrichtung 17 auf, durch die als Druckfluid Flüssigkeit 16 in das Innere des Formteils 2 eingebracht werden kann. Über eine Verbindungsöffnung 11, die während des Einspritzens von Kunststoffschmelze 14 in die Hauptkavität 9 durch ein Absperrelement 12 verschlossen ist, kann die durch die Flüssigkeit 16 aus dem Inneren des Formteils 2 verdrängte Schmelze 14 in die Nebenkavität 10 ausweichen. Diese weist wieder eine Abführung 23 auf, durch die die Flüssigkeit 16 die Nebenkavität 10 bzw. das Spritzgießwerkzeug 1 verlassen kann. Zusätzlich zur Austrittsöffnung 18 und den daran anschließenden Austrittskanal 19 weist das Spritzgießwerkzeug 1 eine Austrittskavität 24 auf, die durch eine Ausnehmung 25 im Spritzgießwerkzeug 1 gebildet ist. Die Ausnehmung 25 kann dabei auf ein Formelement 4 beschränkt sein, sich jedoch auch auf zwei zusammenwirkende und einander an einer Teilungsfläche 7 kontaktierende Formelementen 4 erstrecken. Die die Austrittskavität 24 enthaltenden Formelemente 4 können dabei, wie in Fig. 3 dargestellt, eigene Gießformelemente sein, die Austrittskavität 24 kann jedoch auch in den Formelementen 4, die die Hauptkavität 9 und/oder die Nebenkavität 10 formen, gebildet sein. Die Austrittskavität 24 besitzt in Durchströmrichtung 26 betrachtet, einen Querschnitt, der größer ist als der Querschnitt der Austrittsöffnung 18 bzw. des Austrittskanals 19, wobei der Querschnitt der Austrittskavität 24 vorzugsweise mehr als 10mal größer ist, als der Querschnitt des Austrittskanals 19, also eine deutliche Querschnittserweiterung bildet. Der Übergang vom Austrittskanal 19 in die Austrittskavität 24 erfolgt im dargestellten Ausführungsbeispiel sprungartig, es ist jedoch auch möglich, den Austrittskanal 19 stetig zur Austrittskavität 24 zu erweitern, wodurch die Strömungsverhältnisse an diesem Übergang beeinflusst werden. In Durchströmrichtung 26 am Ende der Austrittskavität 24 ist ein Ablaufanschluss 27 angeordnet, durch den Flüssigkeit 16 die Austrittskavität 24 bzw. das Spritzgießwerkzeug 1 verlässt. Durch die Anordnung dieser zusätzlichen Austrittskavität 24 am Spritzgießwerkzeug 1 kann das bereits zuvor beschriebene Nebenkavitätenverfahren dahingehend verbessert werden, dass die Schmelze 14 bei der Bildung des Hohlraums 3 kontrolliert und gewollt bis in die Austrittskavität 24 verdrängt wird und das Austreten von Flüssigkeit 16 durch eine Schmelzefront 28 in die Austrittskavität 24 verlegt ist und nicht im Bereich der Austrittsöffnung 18 der Nebenkavität erfolgt. Da ein Eintreten von Flüssigkeit 16 in den Bereich der Hauptkavität 9 bzw. der Nebenkavität 10 nachfolgende Spritzgießvorgänge nachteilig beeinflusst würden, ist es von größer Bedeutung, dass die sich beim Durchdrücken der Flüssigkeit 16 durch das Innere des Formteils 2 bildende Flüssigkeitsfront 29 erst in der Austrittskavität 24 durch die Schmelzefront 28 nach außen ergießt. Um zu verhindern, dass Teile der Schmelze 14 bis zum Ablaufanschluss 27 der Austrittskavität 24 gelangen, ist im dargestellten Ausführungsbeispiel am Ende der Austrittskavität 24 eine mechanische Rückhalteeinrichtung 30 in Form von mehreren, zueinander parallelen und in Entformrichtung orientierten Stabelementen 31 ausgebildet. Diese Stabelemente 31 bilden quasi ein Sieb, das für die Flüssigkeit leicht durchlässig ist, jedoch zähflüssige Schmelze bzw. erstarrte Bestandteile der Schmelze 14 zurückhält und somit vom Eintreten in den Ablaufanschluss 27 abhält. Gegebenenfalls anhaftende Schmelze 14 kann durch die Orientierung in Entformrichtung leicht von den Stabelementen 31 gelöst werden.

Da die Strömungsverhältnisse beim Verdrängen der Schmelze 14 durch die Flüssigkeit 16 von vielen Einflussparametern, wie z.B. Volumenstrom der Flüssigkeit 16, Einspritzdruck der Flüssigkeit 16, verbleibende Restwandstärke der Formteilwand 21, Strömungsquerschnitte in den einzelnen Kavitäten, usw. abhängig ist, kann das Fließverhalten der Schmelze 14 und der Flüssigkeit 16 in der Nebenkavität 10 sowie der Austrittskavität 24 nur ungefähr vorgesagt werden. So ist zum Beispiel möglich, dass sich aufgrund einer schnellen Verdrängung der Schmelze 14 nach der Verbindungsöffnung 11 eine Strömung mit einem freien Spritzstrahl, der an der Austrittsöffnung 18 vorbeischießt, ausbildet, wodurch sich die Nebenkavität 10 in Fig. 3 im Wesentlichen von rechts nach links füllt, und Schmelze 14 erst gegen Ende des Verdrängvorganges durch die Austrittsöffnung 18 in die Austrittskavität 24 gedrückt wird.

Hingegen ist bei einem langsamen Verdrängen der Schmelze 14 auch möglich, dass diese verhältnismäßig langsam durch die Verbindungsöffnung 11 quillt und die Nebenkavität 10 in Fig. 3 im Wesentlichen von links nach rechts befüllt wird, wodurch bereits zu einem früheren Zeitpunkt Schmelze 14 in die Austrittsöffnung 18 und in Folge auch in die Austrittskavität 24 eindringen kann.

Für die Aufteilung des Schmelzestroms in die Nebenkavität 10 bzw. die Austrittskavität 24 ist es jedenfalls vorteilhaft, wenn die Austrittsöffnung 18 bzw. der Austrittskanal 19 einen kleineren Querschnitt besitzen, als die Nebenkavität 10, wodurch sichergestellt ist, dass beim Verdrängen der Schmelze 14 der Großteil in die Austrittskavität 24 gelangt, sondern zuerst hauptsächlich die Nebenkavität 10 mit Schmelze 14 ausgefüllt wird. Dazu ist es, je nach Art der vorherrschenden Strömung der Schmelze 14 in der Nebenkavität 10, von Vorteil, wenn die Austrittsöffnung 18 in Durchströmrichtung 26 betrachtet nahe am Anfang bzw. am Ende der Nebenkavität 10 angeordnet ist. Die Querschnittsfläche der Austrittsöffnung 18 ist dabei vorteilhaft kleiner als das 0,5fache, vorzugsweise kleiner als das 0,3fache, insbesondere als das 0,1 fache der Querschnittsfläche der Nebenkavität. Durch diese Größenverhältnisse wird auch erreicht, dass während des Verdrängens der Schmelze 14 in die Nebenkavität 10 ein kleiner Anteil an Schmelze 14 auch durch die Austrittsöffnung 18 in Richtung der Austrittskavität 24 gelangt und die Schmelze 14 im Austrittskanal 19 nicht vorzeitig erstarrt, wodurch ein weiteres Vordringen der Flüssigkeit 16 bis in die Austrittskavität 24 bzw. den Ablaufanschluss 27 blockiert wäre.

Fig. 4 zeigt denselben Schnitt durch ein Spritzgießwerkzeug 1, jedoch zu einem Zeitpunkt, bei dem die Flüssigkeit 16 die Schmelzefront 28 in der Austrittskavität 24 bereits durchbrochen hat und die Spritzgießform 1 am Auslaufanschluss 27 verlässt.

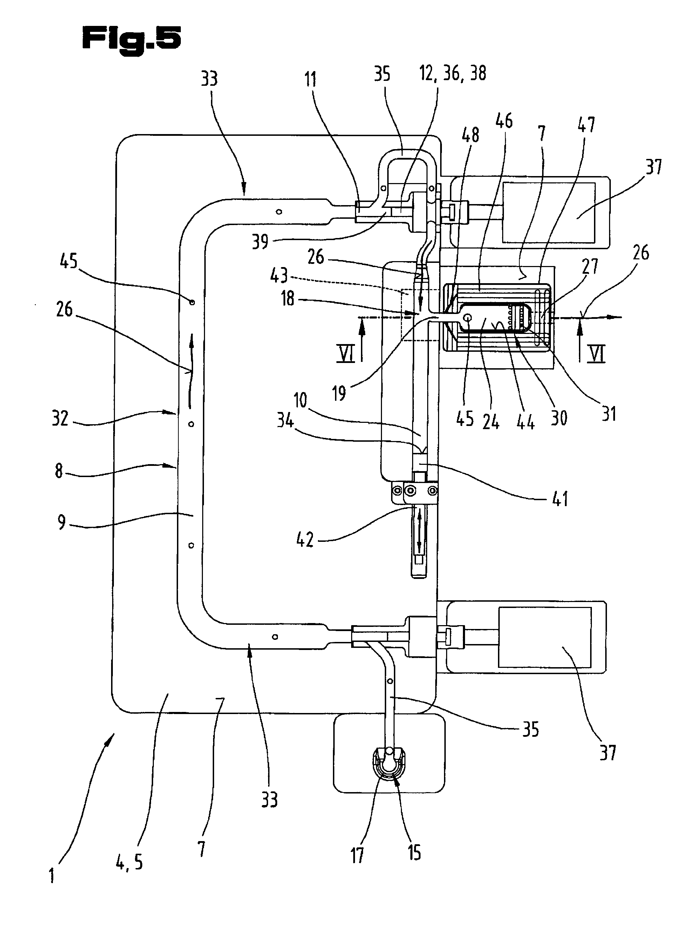

Fig. 5 zeigt als weiteres Ausführungsbeispiel eine Draufsicht auf die Teilungsfläche 7 der unteren Formhälfte 5 eines Spritzgießwerkzeuges 1 bei abgehobener oberer Formhälfte 6. Die Kavität 8 ist in diesem Fall für die Herstellung eines rohrförmigen Formteils 2 geeignet, der im Wesentlichen einen langen Rohrschenkel 32 und zwei daran rechtwinkelig anschließende kurze Rohrschenkel 33 umfasst. Diese Form eines Spritzgießteiles ist ein typisches Anwendungsbeispiel für die Flüssigkeitsinjektionstechnik, da diese Form nicht durch Ziehkerne oder gleichwirkende Formelemente herstellbar ist, durch Verdrängen der Schmelze 14 aus dem Inneren des Formteils 2 jedoch mit sehr glatten Innenwänden und geringen Restwandstärken herstellbar ist.

Die Kavität 8 umfasst wieder eine Hauptkavität 9, die sich, in Durchströmrichtung 26 betrachtet, von der Zuführung 15 in Form der Injektoreinrichtung 17 im Bereich des linken, kurzen Rohrschenkels 33 bis zur Verbindungsöffnung 11 am Ende des rechten, kurzen Rohrschenkels 33 erstreckt, sowie eine Nebenkavität 10, die sich von der Verbindungsöffnung 11 bis zu einer Stirnfläche 34 der Nebenkavität 10 erstreckt. Die Hauptkavität 9 und die Nebenkavität 10 umfassen in diesem Beispiel Verbindungskanäle 35, die die Platz sparende bauliche Anordnung der Komponenten ermöglichen, für die Wirkungsweise des Spritzgießwerkzeuges 1, bzw. das erfindungsgemäße Verfahren jedoch nur insofern von Bedeutung sind, dass ihre Volumina bei der Dosierung des Spritzgießvorgangs bzw. der Dimensionierung der Kavitäten 9, 10 mitberücksichtigt werden müssen.

Das Absperrelement 12, das während des eigentlichen Spritzgießvorgangs die Verbindungsöffnung 11 zwischen der Hauptkavität 9 und der Nebenkavität 10 verschließt ist hier durch einen Sperrstift 36 gebildet, der in Sperrposition den rechten Verbindungskanal 35 im Bereich der Verbindungsöffnung 11 blockiert, wodurch die Schmelze 14 beim Spritzgießvorgang nur bis zur Stirnfläche des Sperrstiftes 36 gelangt. Gleichzeitig mit dem Aktivieren der Zuführung 15, bei der Flüssigkeit 16 mit durch die Injektoreinrichtung 17 in den linken Verbindungskanal 35 in gedrückt wird, wird der Sperrstift 36 mittels eines Betätigungszylinders 37 in die in Fig. 5 dargestellte, zurückgezogene Durchlassposition gezogen. Dadurch wird die Verbindungsöffnung 11 freigegeben und die in den linken Verbindungskanal 35 eintretende Flüssigkeit 16 kann die noch nicht erstarrte Schmelze 16 aus dem Inneren der Hauptkavität 9 in die Nebenkavität 10 verdrängen.

Von der Nebenkavität 10 zweigt an der Austrittsöffnung 18 der Austrittskanal 19 ab und dieser mündet in die Austrittskavität 24 mit dem Ablaufanschluss 27 an deren Ende. Kurz vor dem Ende der Austrittskavität 24 ist eine Rückhalteeinrichtung 30 in Form von in Reihen angeordneten und in Entformrichtung, also normal auf die Teilungsfläche 7 orientierten Stabelementen 31 angeordnet, die ein Eintreten von Schmelze 14 bzw. erstarrtem Material in den Ablaufanschluss 27 verhindert, jedoch den Abfluss der Flüssigkeit 16 gestattet.

Bei Formteilen 2, die nicht zur Durchleitung von Medien verwendet werden, kann es erforderlich sein, die nach Entfernen des in den Verbindungskanälen erstarrten Kunststoffmaterials verbleibenden Öffnungen zu vermeiden. Dazu ist die in Fig. 5 dargestellte und im Folgenden beschriebene Ausführung des Spritzgießwerkzeugs 1 verwendbar. Dabei ist Verlängerung des linken, kurzen Rohrschenkels 33 im Verbindungskanal 35 ein Verschlussstift 38 angeordnet, der in zurückgezogener, in Fig. 5 dargestellter Position eine Pfropfenkavität 39 freigibt. Der beim Spritzgießvorgang in der Propfenkavität 39 entstehende, nicht dargestellte Pfropfen wird vor dem Entformen des Formteils 2 durch Ausschieben des Verschlussstiftes 38 in den Hohlraum 3 im linken, kurzen Rohrschenkel 33 gedrückt, wodurch der Hohlraum 3 am Ende des Rohrschenkels 33 verschlossen wird. Dies verhindert im Gebrauch das Eintreten von schwer zu entfernenden Verunreinigungen in den Hohlraum 3.

In Folge wird der Verfahrensablauf für die Herstellung des Formteils 2 mittels des Spritzgießwerkzeugs 1 gemäß Fig. 5 kurz erläutert.

Am Beginn des Spritzgießvorganges ist die Spritzgießform 1 geschlossen, alle Kavitäten 8 vollständig entformt, bzw. entleert, mittels der Betätigungszylinder 37 der Sperrstift 36 in Sperrposition und der Verschlussstift 38 in zurückgezogene Position gebracht sowie die Düse der Injektoreinrichtung 17 in Ruhestellung gebracht.

Durch Einspritzen der Schmelze 14 über den nicht dargestellten Angusskanal 13 wird die Hauptkavität 9 vollständig, also durch den linken Verbindungskanal 35 bis zur Injektoreinrichtung 17 sowie bis zum Sperrstift 36 an der durch diesen verschlossenen Verbindungsöffnung 11 mit Schmelze 14 gefüllt.

Nach einer für eine vollständige Formfüllung gegebenenfalls erforderlichen Nachdrückzeit und einer die resultierende Wandstärke bestimmenden Abkühlzeit wird die Verbindungsöffnung 11 durch Zurückziehen des Sperrstiftes 36 geöffnet und zur gleichen Zeit durch Aktivieren der Injektoreinrichtung 17 der Zustrom von Flüssigkeit 16 in das noch schmelzflüssige Innere des Formteils 2. Dabei bestimmt der Volumenstrom der zugeführten Flüssigkeit die Menge der je Zeiteinheit in die Nebenkavität 10 verdrängten Schmelze 14 und damit auch die Strömungsverhältnisse in der Nebenkavität 10.

Die Nebenkavität 10 umfasst in der dargestellten Ausführung den rechten Verbindungskanal 35 und einen von der Stirnfläche 34 begrenzte, geradlinige Auffangkavität 40, die ein kreiszylindrischer Hohlraum ist, wobei die Schmelze 14 vom rechten Verbindungskanal 35 in Richtung der Längsachse der Auffangkavität 40 eindringt. Die Auffangkavität 40 und damit auch das Volumen der Nebenkavität 10 kann durch axiale Verstellung der Stirnfläche 34 verändert werden. Wie in Fig. 5 angedeutet, kann die Stirnfläche 34 durch einen in der Auffangkavität 40 weitgehend spielfrei geführten Passzylinder 41 gebildet sein, der mittels einer Bewegungsschraube 42 relativ zum Formelement 4, hier relativ zur unteren Formhälfte 5 in Richtung der Längsachse der Auffangkavität 40 verstellbar ist.

Nahe beim Übergang vom rechten Verbindungskanal 35 zur Auffangkavität 40 ist die Abführung 23 für die Flüssigkeit 16 in Form der Austrittsöffnung 18 angeordnet, durch die ein Teil der Schmelze 14 und in Folge die Flüssigkeit 16 durch den Austrittskanal 19 in die Austrittskavität 24 gelangt. Die Richtung des Austrittskanals 19 ist in der dargestellten Ausführung etwa rechtwinkelig zur Längsachse der Auffangkavität 40, der Querschnitt ist kreisförmig und beträgt weniger als 50 % des Querschnittes der Auffangkavität 40, wobei der Querschnitt im Bereich der Austrittsöffnung 18 selbst noch kleiner ausgeführt ist, beispielsweise in einem Bereich von unter 10 % des Querschnitts der Auffangkavität 40. Um den Querschnitt der Austrittsöffnung 18 rasch und mit geringem Aufwand verändern zu können, ist es möglich den Bereich der Austrittsöffnung 18 durch eigene Wechselelemente 43 auszubilden, die in Fig. 5 strichliert angedeutet sind. Durch vorbereitete Wechselelemente 43 mit verschiedenen Querschnitten der Austrittsöffnung 18 können die Strömungsverhältnisse in der Nebenkavität 10 falls erforderlich schnell und einfach verändert werden.

Der Austrittskanal 19 mündet in die Austrittskavität 24, deren Querschnitt in Durchströmrichtung 26 betrachtet deutlich größer ist, als der Querschnitt des Austrittskanals 19, wodurch die Geschwindigkeit eintretender Schmelze in der Austrittskavität 24 gegenüber dem Austrittskanal 19 deutlich reduziert wird. Da der Hauptanteil der verdrängten Schmelze 14 in die Auffangkavität 40 eintritt, ist der Volumenstrom der Schmelze 14, der in die Austrittskavität 24 eintritt, relativ klein und ein freier Spritzstrahl, der ungehindert bis an das Ende der Austrittskavität 24 gelangt, im allgemeinen nicht zu erwarten.

Das Schmelzevolumen, das nicht von der Auffangkavität 40 aufgenommen werden kann, strömt also in die Austrittskavität 24, in der die nachdrückende Flüssigkeit 16 auch die Schmelzefront 28 durchdringt und in Folge zum Ablaufanschluss 17 fließt. Dabei ist es von Vorteil, wenn die Schmelzefront 28 etwa bis zur Hälfte der Länge der Austrittskavität vordringt, da so eine maximale Reserve in beide Richtungen vorhanden ist, falls das Volumen der verdrängten Schmelze 14 durch Schwankungen in den Prozessparametern schwanken sollte.

Der Volumenstrom an Flüssigkeit 16 an der Zuführung 23 kann nach diesem Zeitpunkt je nach Erfordernis, gleichgehalten, gesteigert oder auch reduziert werden, um durch die dadurch festgelegte weitere Wärmeabfuhr bestimmte Eigenschaften am Formteil 2 zu erzielen.

Nachdem der Formteil über die Formelemente und die innere Kühlung durch die durchströmende Flüssigkeit 16 ausreichend abgekühlt wurde, wird das Verfahren mit dem Entfernen der Flüssigkeit 16 aus dem Hohlraum 3 des Formteils 2 fortgesetzt. Dazu wird die im Inneren enthaltene Flüssigkeitssäule durch Einblasen von Druckgas an der Zuführung 15 über den Ablaufanschluss aus dem Formteil 2 getrieben und in Folge der gebildete Hohlraum 3 durch das durchströmende Druckgas gegebenenfalls auch getrocknet. Als Druckgas kann vorteilhaft auch Druckluft verwendet werden, da diese relativ kostengünstig in vielen Produktionsstätten ausreichend zur Verfugung steht.

Anschließend folgt das Öffnen des Spritzgießwerkzeuges 1 und das Entformen des erstarrten Formteils 2, wofür es vorteilhaft ist, auch in der Austrittskavität 24 eine entsprechende Entformschräge 44 und einen Auswerfer 45 vorzusehen.

Vom eigentlich benötigten Formteil 2 werden anschließend die nicht benötigten, verfahrenstechnisch bedingten, erstarrte Schmelze 14 enthaltenden Abschnitte wie z.B. Angusskanal 13, Verbindungskanäle 35, Nebenkavität 10, Austrittskanal 19 und Austrittskavität 24 in nicht näher beschriebenen Verfahrensschritten getrennt.

Da im Bereich der Austrittskavität 24 geringe Mengen an Flüssigkeit 16 auch nach einem Ausblasen mit Druckluft zurückbleiben können, die im ungünstigsten Falle in das Innere der Spritzgießform 1 gelangen und dort den Spritzgießvorgang empfindlich stören können, sind im Bereich der Teilungsfläche 7 um die Austrittskavität 24 noch weitere Merkmale ausgebildet, die das Eindringen von Flüssigkeit 16 in den Bereich der Kavitäten 8 vermeiden. Der an die Austrittskavität 24 angrenzende Teil der Teilungsfläche 7 weist dazu Vakuumöffnungen 46 auf, die mit einer nicht dargestellten Absaugeinrichtung fluidverbunden sind. Flüssigkeit 16, z.B. in Form von Tropfen, die beim Öffnen des Spritzgießwerkzeuges 1 aus der Austrittskavität 24 austritt, wird durch diese Vakuumöffnungen 46 abgesaugt und dadurch entfernt. Die Vakuumöffnungen 46 sind dabei vorzugsweise schlitzartig ausgeführt und über den gesamten Umfang der Austrittskavität 24 angeordnet, wodurch ein Austritt von Flüssigkeit 16 in allen Richtungen unterbunden wird.

Weiters ist um den Bereich der Vakuumöffnungen 46 ein zusätzliches Dichtelement 47 in der Teilungsfläche 7 angeordnet, das beim Schließen der Spritzgießform 1 komprimiert wird und im unbelasteten Zustand geringfügig über die Teilungsfläche 7 erhaben ist. Dieses Dichtelement 47 umschließt die Austrittskavität 47 fast vollständig, indem seine Enden möglicht weit bis an den Austrittskanal 19 herangeführt sind.

Als weiteres Mittel zur Abdichtung des Bereichs der Austrittskavität 24 sind an der Teilungsfläche 7 der Formelemente 5, 6 im Bereich des Austrittskanals 19 zwischen Austrittsöffnung 18 und Austrittskavität 24 quer zur Mittelachse des Austrittskanals 19 beidseitig orientierte Ausnehmungen 48 zum Anspritzen von Abdichtstegen angeordnet. Diese Abdichtstege werden während des Verdrängprozesses durch Eintreten von Schmelze 14 in die quer orientierten Ausnehmungen 48 ausgefüllt und bilden insbesondere beim Durchbrechen der Flüssigkeitsfront 29 durch die Schmelzefront 28 und dem dadurch bedingten Fluten der Austrittskavität 24 aber auch beim Öffnen des Spritzgießwerkzeuges 1 eine Barriere, die verhindert, dass Flüssigkeit 16 von der Austrittskavität 24 entlang der Teilungsfläche 7 in Richtung der Nebenkavität 10 bzw. Hauptkavität 9 gedrückt wird. Beim Formelement 6, das nach dem Öffnen nicht den gespritzten Formteil 2 enthält, bildet die Ausnehmung 48 eine Rille, die ebenfalls den Transport von Flüssigkeit 16 in Richtung der Nebenkavität 10 hemmt.

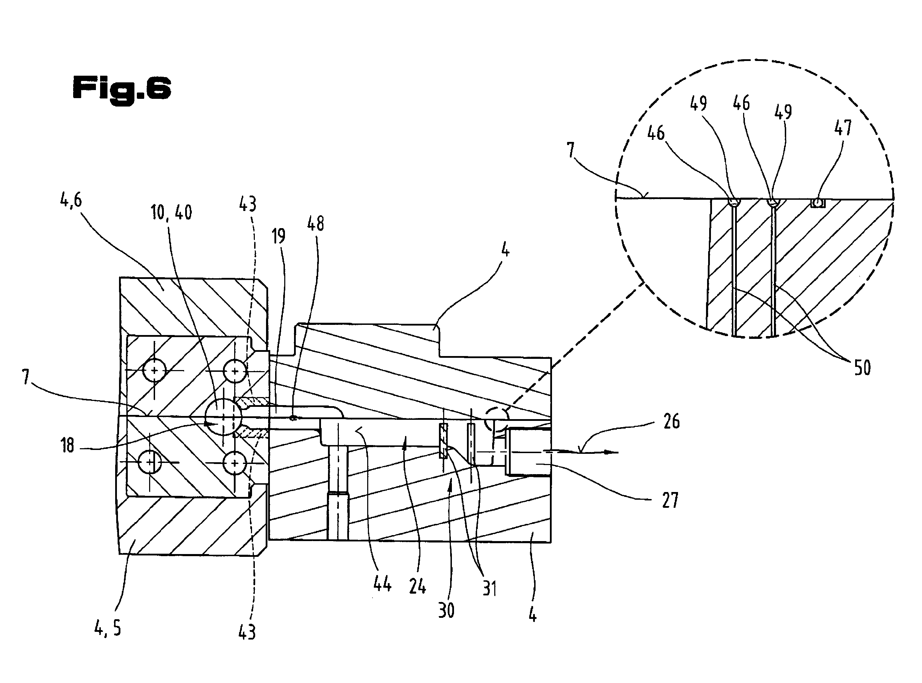

Fig. 6 zeigt einen Schnitt durch das Spritzgießwerkzeug 1 gemäß Fig. 5 entlang der Schnittlinie IV - IV in Fig. 5. Die untere Formhälfte 5 und die obere Formhälfte 6 bilden hierbei an ihrer Teilungsfläche 7 die Auffangkavität 40 aus, in die die Schmelze 14 zum Großteil verdrängt wird. Die überschüssige Schmelze 14 tritt durch die Austrittsöffnung 18 und den Austrittskanal 19 in die Austrittskavität 24 ein, in der sie zum Stillstand kommt und in der die Flüssigkeit 16 die Schmelzefront 28 durchbricht. Dabei verhindert die Rückhalteeinrichtung 20 in Form der Stabelemente 31 ein unbeabsichtigtes Eintreten von Schmelze 14 in den Ablaufanschluss 27.

Weiters sind im vergrößerten Detailausschnitt die in der Teilungsfläche 7 wirkenden Vakuumöffnungen 46 dargestellt, die im dargestellten Ausführungsbeispiel am Grund von rillenartigen Vertiefungen 49 angeordnet sind, wobei die Vertiefungen 49 mit den Vakuumöffnungen 46 fast bis zum Austrittskanal 19 rund um die Austrittskavität 24 geführt sind. Von den einzelnen Vakuumöffnungen 46 führen Absaugkanäle 50 zu einer nicht dargestellten Absaugeinrichtung, die einerseits die erforderliche Vakuumströmung bereitstellt und die gegebenenfalls abgesaugte Flüssigkeit 16 abscheidet.

Nach außen wird der von den Vakuumöffnungen 46 erfasste Bereich der Teilungsfläche 7 von dem bereits erwähnten Dichtelement 47 begrenzt, das insbesondere aus einer O-Ring-Schnurdichtung gebildet ist. Die Rille, in der das Dichtelement 47 eingesetzt ist, besitzt dabei einen Querschnitt, der das Kontaktieren der Formhälften 5, 6 zwar einen Dichtungsdruck entgegensetzt, diese aber nicht blockiert.

Zwischen der Austrittsöffnung 18 und der Austrittskavität 24 sind auch die quer vom Austrittskanal 19 abzweigenden Ausnehmungen 48 angeordnet, die beim Durchströmen von Schmelze 14 in die Austrittskavität 24 ausgefüllt werden und während des Öffnens der Spritzgießform 1 Barrieren gegen das Vordringen von Flüssigkeit 16 in den Bereich der Nebenkavität 10 bilden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Der Ordnung halber sei abschließend darauf hingewiesen, dass zum besseren Verständnis des Aufbaus des Spritzgießwerkzeuges 1 dieses bzw. dessen Bestandteile teilweise unmaßstäblich und/oder vergrößert und/oder verkleinert dargestellt wurden.

## Patentansprüche

1. Verfahren zur Herstellung eines Polymer-Formteils (2) mit einem Hohlraum (3) durch einen Spritzgießvorgang mit einem Spritzgießwerkzeug (1) und anschließender Flüssigkeitsinjektion zur Erzeugung des Hohlraumes (3), bei dem eine Hauptkavität (9) zur Gänze mit Schmelze (14) gefüllt wird, nach Erstarren der Schmelze (14) an den Kavitätenwänden (20) an einem Ende der Hauptkavität (9) durch eine Zuführung (15) Flüssigkeit (16) in die Schmelze (14) gedrückt wird und am gegenüberliegenden Ende der Hauptkavität (9) eine Nebenkavität (10) geöffnet wird, wodurch die noch fließfähige Schmelze (14) im Inneren des Formteils (2) durch die Flüssigkeit (16) in die Nebenkavität (10) verdrängt wird und der Hohlraum (3) im Formteil (2) erzeugt wird, wobei die Nebenkavität (10) eine Austrittsöffnung (18) aufweist, danach gegebenenfalls die Flüssigkeit (16) aus dem Hohlraum (3) in der Hauptkavität (9) und der Nebenkavität (10) entfernt wird und der abgekühlte Formteil (2) anschließend entformt wird, **dadurch gekennzeichnet, dass** an die Austrittsöffnung (18) eine Austrittskavität (24) anschließt, wobei durch Ausfüllen der Nebenkavität (10) mit Schmelze (14) ein Teil der Schmelze (14) durch die Austrittsöffnung (18) in die Austrittskavität (24) gedrückt wird und die Flüssigkeit (16) durch die Austrittsöffnung (18) und die dahinter befindliche Schmelze (14) hindurch in die Austrittskavität (24) gedrückt wird und die Flüssigkeit das Spritzgießwerkzeug (1) über einen Ablaufanschluss (27) an der Austrittskavität (24) verlässt.

2. Verfahren, nach Anspruch 1, **dadurch gekennzeichnet, dass** ein durch die Zuführung (15) zugeführter Volumenstrom der Flüssigkeit (16) vom Beginn der Schmelzeverdrängung bis zum Austreten von Flüssigkeit (16) durch den Ablaufanschluss (27) der Austrittskavität (24) einen Wert größer als Null aufweist.

3. Verfahren nach Anspruch 1 oder 2, **dadurch gekennzeichnet, dass** ein durch die Zuführung (15) zugeführter Volumenstrom oder der Druck der Flüssigkeit (16) mittels einer Steuerund Regeleinrichtung an einen voreingestellten Verlauf anpassbar ist.

4. Verfahren nach einem der Ansprüche 1 bis 3, **dadurch gekennzeichnet, dass** durch aktive Beeinflussung der Wärmeabfuhr bzw. Wärmezufuhr im Bereich von Austrittsöffnung (18) und Austrittskanal (19) verhindert wird, dass die Schmelze (14) bei der Austrittsöffnung (18) und/oder im Austrittskanal (19) erstarrt, bevor die Flüssigkeit (16) die Austrittskavität (24) erreicht hat.

5. Verfahren nach einem der Ansprüche 1 bis 4, **dadurch gekennzeichnet, dass** die Verfahrensparameter so gewählt sind, dass nach Austritt der Flüssigkeit (16) am Ablaufanschluss (27) durchschnittlich etwa 50 % des Volumens der Austrittskavität (24) von Schmelze (14) eingenommen sind.

6. Verfahren nach einem der Ansprüche 1 bis 5, **dadurch gekennzeichnet, dass** das Volumen der Nebenkavität (10) so gewählt ist, dass der von der Flüssigkeit (16) in der Nebenkavität (10) gebildete Hohlraum nur unwesentlich über die Position der Austrittsöffnung (18) hinausragt.

7. Verfahren nach einem der Ansprüche 1 bis 6, **dadurch gekennzeichnet, dass** als Flüssigkeit (16) Wasser verwendet wird.

## Claims

1. A method for manufacturing a polymer moulding (2) having an internal space (3) using an injection moulding process including an injection mould (1) and associated liquid injection for generating the internal space (3), in which a main cavity (9) is entirely filled with melt (14) and, after solidification of the melt (14) at the cavity walls (20), liquid (16) is forced into the melt (14) through an infeed (15) at one end of the main cavity (9), and an ancillary cavity (10) is opened at the opposite end of the main cavity (9), whereby the melt (14), which is still fluid and which is inside the moulding (2), is forced into the ancillary cavity (10) by the liquid (16) to generate the internal space (3) in the moulding (2), wherein the ancillary cavity (10) has a discharge opening (18) whereby, if necessary, the liquid (16) is removed from the internal space (3) in the main cavity (9) and the ancillary cavity (10) and the cooled moulding (2) is then unmoulded, **characterized in that** a discharge cavity (24) is connected to the discharge opening (18) whereby, upon complete filling of the ancillary cavity (10) with melt (14), a portion of the melt (14) is passed under pressure through the discharge opening (18) into the discharge cavity (24), and the liquid (16) is passed under pressure right through the discharge opening (18) and the melt (14) located behind it into the discharge cavity (24) and the liquid vacates the injection mould (1) via a drainage connection (27) at the discharge cavity (24).

2. The method according claim 1, **characterized in that** the value of a volume flow of the liquid (16) fed through the infeed (15) is greater than zero from the start of the displacement of the melt until liquid (16) leaves through the drainage connection (27) of the discharge cavity (24).

3. The method according to claim 1 or 2, **characterized in that** a volume flow or the pressure of the liquid (16) fed through the infeed (15) is capable of being set to a predetermined profile by means of a monitoring and control device.

4. The method according to any one of claims 1 to 3, **characterized in that** the melt (14) is prevented from solidifying at the discharge opening (18) and/or in the discharge channel (19) before the liquid (16) has reached the discharge cavity (24) by means of active management of the heat dissipation or heat supply in the region of the discharge opening (18) and the discharge channel (19).

5. The method according to any one of claims 1 to 4, **characterized in that** the parameters of the method are selected such that, after discharge of the liquid (16) at the drainage connection (27), on average approximately 50% of the volume of the discharge cavity (24) is taken up by melt (14).

6. The method according to any one of claims 1 to 5, **characterized in that** the volume of the ancillary cavity (10) is selected such that the internal space formed by the liquid (16) in the ancillary cavity (10) extends beyond the position of the discharge opening (18).

7. The method according to any one of claims 1 to 6, **characterized in that** water is used as the liquid (16).

## Revendications

1. Procédé permettant de réaliser une pièce moulée polymère (2) comportant un espace vide (3), au moyen d'un processus de moulage par injection avec un moule d'injection (1) et d'une injection de liquide consécutive pour la réalisation de l'espace vide (3), dans lequel procédé une cavité principale (9) est complètement remplie par une matière en fusion (14), après la solidification de la matière en fusion (14), le liquide (16) est poussé dans la matière en fusion (14) à travers une entrée (15) au niveau des parois (20) à une extrémité de la cavité principale (9), et une cavité annexe (10) est ouverte au niveau de l'extrémité opposée de la cavité principale (9), moyennant quoi la matière en fusion (14) encore fluide à l'intérieur de la pièce moulée (2) est poussée par le liquide (16) dans la cavité annexe (10) et l'espace vide (3) est formé dans la pièce moulée (2), ladite cavité annexe (10) comportant une ouverture d'évacuation (18), ensuite, le cas échéant, le liquide (16) est évacué hors de l'espace vide (3) dans la cavité principale (9) et la cavité annexe (10) et la pièce moulée (2) refroidie est ensuite démoulée, **caractérisé en ce qu'**une cavité d'évacuation (24) est située dans le prolongement de l'ouverture d'évacuation (18), et sous l'effet du remplissage de la cavité annexe (10) par la matière en fusion (14), une partie de la matière en fusion (14) étant poussée à travers l'ouverture d'évacuation (18) dans la cavité d'évacuation (24) et le liquide (16) étant poussé à travers l'ouverture d'évacuation (18) et à travers la matière en fusion (14) se situant en aval de celle-ci vers la cavité d'évacuation (24), et le liquide quitte le moule d'injection (1) via un raccord d'évacuation (27) au niveau de la cavité d'évacuation (24).

2. Procédé selon la revendication 1, **caractérisé en ce qu'**un flux volumique du liquide (16) acheminé à travers l'entrée (15) présente une valeur supérieure à zéro depuis le début du refoulement de la matière en fusion jusqu'à l'échappement du liquide (16) à travers le raccord d'évacuation (27) de la cavité d'évacuation (24).

3. Procédé selon la revendication 1 ou 2, **caractérisé en ce qu'**un flux volumique du liquide (16) acheminé à travers l'entrée (15) ou la pression du liquide (16) peuvent être ajustés à un écoulement préréglé au moyen d'un dispositif de commande et réglage.

4. Procédé selon l'une quelconque des revendications 1 à 3, **caractérisé en ce qu'**une influence active exercée sur la dissipation de la chaleur ou sur l'admission de la chaleur dans la zone de l'ouverture d'évacuation (18) et du conduit d'évacuation (19) permet d'empêcher que la matière en fusion (14) se solidifie au niveau de l'ouverture d'évacuation (18) et/ou dans le conduit d'évacuation (19) avant que le liquide (16) ait atteint la cavité d'évacuation (24).

5. Procédé selon l'une quelconque des revendications 1 à 4, **caractérisé en ce que** les paramètres du procédé sont choisis de telle sorte que, après l'échappement du liquide (16) à travers le raccord d'évacuation (27), la matière en fusion (14) occupe en moyenne environ 50 % du volume de la cavité d'évacuation (24).

6. Procédé selon l'une quelconque des revendications 1 à 5, **caractérisé en ce que** le volume de la cavité annexe (10) est choisi de telle sorte que l'espace vide formé par le liquide (16) dans la cavité annexe (10) s'avance seulement de manière négligeable au-delà de la position de l'ouverture d'évacuation (18).

7. Procédé selon l'une quelconque des revendications 1 à 6, **caractérisé en ce que** le liquide (16) utilisé est de l'eau.
